# EUROPEAN PATENT SPECIFICATION

(11) **EP 3 100 548 B1**
(45) Date of publication and mention of the grant of the patent: **26.08.2020**
(21) Application number: 14702798.1
(22) Date of filing: 31.01.2014
(51) Int. Cl.: H04L 5/14, H04L 1/00, H04L 5/00

(54) **A METHOD AND APPARATUS FOR ENHANCING A DYNAMIC RANGE FOR ENHANCED INTERFERENCE MANAGEMENT AND TRAFFIC ADAPTATION**
VERFAHREN UND VORRICHTUNG ZUR VERBESSERUNG EINES DYNAMIKBEREICHS FÜR VERBESSERTES INTERFERENZMANAGEMENT UND VERKEHRSANPASSUNG
PROCÉDÉ ET APPAREIL POUR AMÉLIORER UNE PLAGE DYNAMIQUE POUR UNE GESTION DE BROUILLAGE ET UNE ADAPTATION DE TRAFIC AMÉLIORÉES

(43) Date of publication of application: 07.12.2016
(73) Proprietor: Nokia Solutions and Networks Oy, 02610 Espoo (FI)
(72) Inventor: LUNTTILA, Timo Erkki, FIN-02200 Espoo (FI); KOIVISTO, Tommi, FIN-02780 Espoo (FI); TIIROLA, Esa Tapani, FIN-90450 Kempele (FI); HOOLI, Kari Juhani, FIN-90540 Oulu (FI)
(74) Representative: Nokia EPO representatives
(86) International application number: PCT/EP2014/051865
(87) International publication number: WO 2015/113613

(56) References cited:
- EP-A1- 2 688 261
- WO-A1-2011/098844
- INTERDIGITAL: "On explicit and implicit signaling for TDD UL-DL reconfiguration", 3GPP DRAFT; R1-132180, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20130520 - 20130524 11 May 2013 (2013-05-11), XP050697954, Retrieved from the Internet: URL:http://www.3gpp.org/ftp/tsg_ran/WG1_RL 1/TSGR1_73/Docs/ [retrieved on 2013-05-11]

## Description

### BACKGROUND:

### Field:

Embodiments of the invention relate to enhancing a dynamic range for enhanced interference management and traffic adaptation in Time-Division-Duplexing (TDD). Description of the Related Art:

Long-term Evolution (LTE) is a standard for wireless communication that seeks to provide improved speed and capacity for wireless communications by using new modulation/signal processing techniques. The standard was proposed by the 3^{rd} Generation Partnership Project (3GPP), and is based upon previous network technologies. Since its inception, LTE has seen extensive deployment in a wide variety of contexts involving the communication of data. "On explicit and implicit signalling for TDD UL-DL reconfiguration", InterDigital, 3GPP Draft R1-132180, relates to signaling mechanisms to support UL-DL reconfiguration. International patent publication no. WO 2011/098844 relates to effective ways to use a special subframe for a TDD relay backhaul.

### SUMMARY:

The invention is defined by the appended claims. According to a first embodiment, a method includes, in a long term evolution time-division-duplex system, determining, by a network entity, a first uplink-downlink configuration for a cell among a plurality of uplink-downlink configurations. The method also includes transmitting, by the network entity, an indication indicating the first uplink-downlink configuration. At least two of the uplink-downlink configurations of the plurality of uplink-downlink configurations are associated with a special subframe configuration. At least one of the associated special subframe configurations is distinct from at least one other special subframe configuration. If the first uplink-downlink configuration shows more traffic in uplink and the associated special subframe configuration comprises more symbols allocated for an uplink-pilot-time-slot than for a guard period and downlink-pilot-time-slot, the uplink-pilot-time-slot contains a physical-uplink-shared-channel.

In the method of the first embodiment, the association between the first uplink-downlink configuration and the associated special subframe configuration is pre-determined or is configured via Radio-Resource-Control signaling.

The first uplink-downlink configuration may show more traffic in uplink, and the associated special subframe configuration includes more symbols allocated for a uplink-pilot-time-slot than for a guard period and downlink-pilot-time-slot.

The first uplink-downlink configuration may show more traffic in downlink, and the associated special subframe configuration can include more symbols allocated for a downlink-pilot-time-slot than for a guard period and uplink-pilot-time-slot.

In the method of the first embodiment, the method further includes transmitting an indication indicating a second uplink-downlink configuration. The indication is transmitted via a system information block.

In the method of the first embodiment, the method can further include transmitting an indication indicating a special subframe configuration with a long guard period. The indication is transmitted via a system information block.

According to a second embodiment, an apparatus includes at least one processor. The apparatus also includes at least one memory including computer program code. The at least one memory and the computer program code can be configured, with the at least one processor, to cause the apparatus at least to, in a long-term evolution time division duplex system, determine a first uplink-downlink configuration for a cell among a plurality of uplink-downlink configurations. The apparatus can also be caused to transmit an indication indicating the first uplink-downlink configuration. At least two of the uplink-downlink configurations of the plurality of uplink-downlink configurations are associated with a special subframe configuration. At least one of the associated special subframe configurations is distinct from at least one other special subframe configuration. If the first uplink-downlink configuration shows more traffic in uplink and the associated special subframe configuration comprises more symbols allocated for an uplink-pilot-time-slot than for a guard period and downlink-pilot-time-slot, the uplink-pilot-time-slot contains a physical-uplink-shared-channel.

In the apparatus of the second embodiment, the association between the first uplink-downlink configuration and the associated special subframe configuration is pre-determined or is configured via Radio-Resource-Control signaling.

The first uplink-downlink configuration may show more traffic in uplink, the associated special subframe configuration can include more symbols allocated for an uplink-pilot-time-slot than for a guard period and downlink-pilot-time-slot.

The first uplink-downlink configuration may show more traffic in downlink, and the associated special subframe configuration can include more symbols allocated for a downlink-pilot-time-slot than for a guard period and uplink-pilot-time-slot.

In the apparatus of the second embodiment, the apparatus is further caused to transmit an indication indicating a second uplink-downlink configuration. The indication is transmitted via a system information block.

In the apparatus of the second embodiment, the apparatus is further caused to transmit an indication indicating a special subframe configuration with a long guard period, and the indication is transmitted via a system information block.

According to a third embodiment, a computer program product can be embodied on a non-transitory computer readable medium, the computer program product configured to control a processor to perform a process, including, in a long-term evolution time division duplex system, determining, by a network entity, a first uplink-downlink configuration for a cell among a plurality of uplink-downlink configurations. The process can also include transmitting, by the network entity, an indication indicating the first uplink-downlink configuration. At least two of the uplink-downlink configurations of the plurality of uplink-downlink configurations are associated with a special subframe configuration. At least one of the associated special subframe configurations is distinct from at least one other special subframe configuration. If the first uplink-downlink configuration shows more traffic in uplink and the associated special subframe configuration comprises more symbols allocated for an uplink-pilot-time-slot than for a guard period and downlink-pilot-time-slot, the uplink-pilot-time-slot contains a physical-uplink-shared-channel.

### BRIEF DESCRIPTION OF THE DRAWINGS:

For proper understanding of the invention, reference should be made to the accompanying drawings, wherein:
Fig. 1 illustrates an example configuration in accordance with one embodiment.
Fig. 2 illustrates possible Uplink-Downlink configurations.
Fig. 3 illustrates a configuration of PSS/SSS transmissions.
Fig. 4 illustrates 10 different special subframe configurations.
Fig. 5 illustrates special subframe configurations.
Fig. 6 illustrates an Uplink-heavy Uplink-Downlink configuration and an associated Uplink-heavy special subframe configuration with a shortened Physical-Uplink-Shared Channel.
Fig. 7 illustrates a Downlink-heavy Uplink-Downlink configuration and an associated Downlink-heavy special subframe configuration.
Fig. 8 illustrates examples of UL-heavy special subframe configurations.
Fig. 9 illustrates different options to define DL-heavy special subframe configurations.
Fig. 10 illustrates a flowchart of a method in accordance with embodiments of the invention.
Fig. 11 illustrates a flowchart of a method in accordance with embodiments of the invention.
Fig. 12 illustrates an apparatus in accordance with embodiments of the invention.
Fig. 13 illustrates an apparatus in accordance with embodiments of the invention.
Fig. 14 illustrates an apparatus in accordance with embodiments of the invention.
Fig. 15 illustrates an apparatus in accordance with embodiments of the invention.
Fig. 16 illustrates an apparatus in accordance with embodiments of the invention.

### DETAILED DESCRIPTION:

Embodiments of the present invention may flexibly allocate special subframe resources for dynamic configuration/reconfiguration of special subframes for TDD eIMTA. As described in more detail below, embodiments of the present invention provide a method/procedure to adaptively allocate special subframe resources according to a UL-DL configuration indicated for the UE and according to a corresponding uplink/downlink traffic status. Embodiments of the present invention enhance the flexibility of the usage of special subframe resources for TDD Enhanced Interference Management and Traffic Adaptation (eIMTA). As described in greater detail below, if a UL/DL configuration shows more traffic in downlink (is downlink-heavy), more symbols may be placed in a Downlink-Pilot-Time-Slot (DwPTS), for example, of a downlink-heavy special subframe. A special subframe configuration is downlink heavy if there are more symbols allocated for DwPTS than for a guard period and UpPTS. If the UL/DL configuration shows more traffic in uplink (is uplink-heavy), more symbols may be allocated in an Uplink-Pilot-Time-Slot (UpPTS) forming an uplink-heavy special subframe. A special subframe configuration is uplink heavy if there are more symbols allocated for a guard period and UpPTS than for DwPTS. Embodiments of the present invention provide additional TDD eIMTA performance gain and has future impact on potential enhancement of the TDD eIMTA. Embodiments of the present invention also include operations (at both an evolved Node B (eNB) and a user equipment (UE)) to provide backwards compatibility, as described in more detail below.

Embodiments of the present invention allow the special subframe to be configured as desired by an operator. In other words, embodiments of the present invention allow the special subframe configuration to change depending on an UL-DL configuration that has been indicated to the UE, and depending on a corresponding traffic status (and/or any other criterion applied).

Embodiments of the present invention relate to LTE-Advanced systems, which may be a part of 3GPP LTE Release 12 or beyond. Specifically, embodiments of the present invention are directed to enhancing flexibility in dynamic Time-Division-Duplexing (TDD). In other words, embodiments of the present invention increase an amount of radio resources that can be flexibly allocated to downlink or uplink (instead of being allocated to either downlink or uplink in a static manner).

There is currently ongoing work directed to dynamic TDD in 3GPP within the Release 12 Work Item Enhanced-Interference-Management-and-Traffic-Adaptation (eIMTA) - "Further Enhancements to LTE TDD for DL-UL Interference Management and Traffic Adaptation." The Work Item Description for elMTA (RP-121772 by CATT) was approved at a RAN#58 meeting. Embodiments of the present invention relate to this topic, and may be a further enhancement and/or an optimization to what will be specified during or after Release 12.

The goal of the currently ongoing Release 12 eIMTA Work Item (WI) is to enable more flexible TDD UL-DL reconfiguration for traffic adaptation in, for example, small cells, depending on a ratio of uplink and downlink traffic. In view of Release 12 assumptions, an enhanced Node B (eNB) may vary an UL-DL configuration relatively often (for those UEs configured to flexible UL/DL mode) compared to the previous approaches where UL-DL configuration is generally static. The basic assumptions for elMTA functionality, based on 3GPP RAN WG1 progress, are as follows.
- A predefined cell-specific UL-DL configuration may be broadcasted to a cell using System Information Block 1 (SIB1). The legacy UEs (UEs used in accordance with Release 8 through Release 11, for example) in the cell may follow this transmitted/broadcasted configuration.
- In general, no new TDD UL-DL configurations need to be introduced. Flexible Time-Division-Duplex (TDD) reconfiguration can occur among existing configurations (for example, among the existing seven configurations). The existing configurations are described in more detail below.
- In embodiments of the present invention, TDD reconfiguration can occur at a periodicity corresponding to a periodicity for those UEs configured with flexible TDD configuration. The periodicity can be configured by the eNB and may have at least the following values: [10, 20, 40, 80] ms.

- In each radio frame configuration, there are fixed subframes where the link direction is generally predetermined. These fixed subframes are denoted as "D" (Downlink), "S" (Special), and "U" (Uplink).
- Additionally, there are flexible subframes (denoted as "F") as well. Flexible (F) subframes can be used as "D" or as "U."
- The number of flexible subframes depends on the particular scenario (such as a scenario depending on an SIB1-configured UL-DL configuration and/or a DL Hybrid-Automatic-Repeat-Request (HARQ) reference UL-DL configuration defining HARQ/scheduling timing for Physical-Downlink-Shared Channel (PDSCH)).

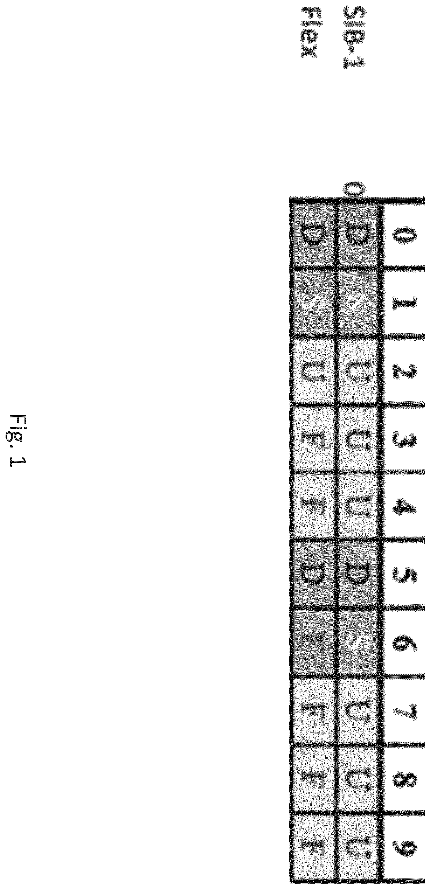

Fig. 1 illustrates an example configuration in accordance with one embodiment. As shown in Fig. 1, SIB-1-configured UL-DL configuration "0" can be an example configuration. The principles that are described in conjunction with configuration "0" can be applicable to other configurations as well. In addition to the SIB1-configured UL-DL configuration, which defines whether given subframes in the radio frame are downlink, special, or uplink subframes, in the case of flexible TDD UL-DL configurations, some of the uplink subframes can be changed into downlink subframes. Referring to subframe #6, subframe #6 is a special case of flexible subframes with eIMTA because subframe #6 can be used as D or as S (but not as U). Embodiments of the present invention relate to increasing the resources that are flexible, which are the resources that can be either uplink or downlink.

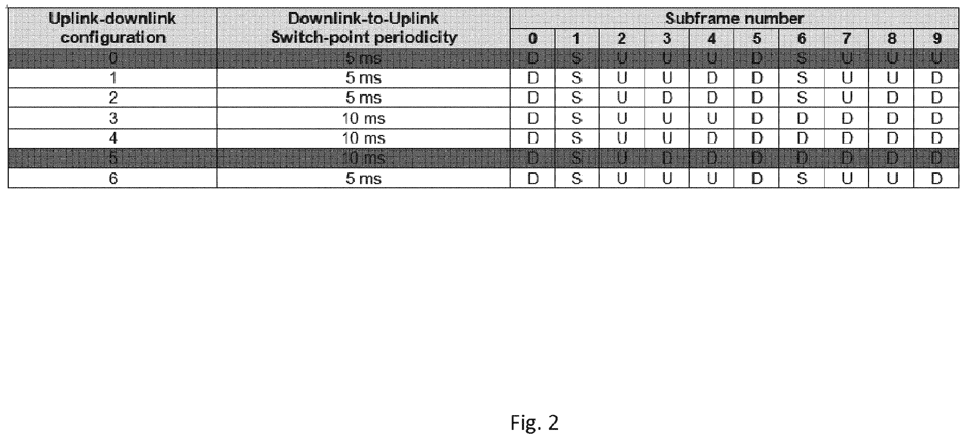

Fig. 2 illustrates possible UL-DL configurations. As previously discussed, in TDD eIMTA, dynamic switching between downlink and uplink can be achieved by switching between seven existing UL-DL configurations.

As a part of the 3GPP elMTA work in the elMTA study item, it was shown that the gains of dynamic TDD generally increase as flexibility is increased. Specifically, the gains of dynamic TDD generally increase as a function of a number of flexible subframes (those subframes that can be either DL or UL). From Fig. 2, it can seen that, with UL-DL configuration 5, while almost nine out of the ten subframes within one radio frame can be utilized for downlink (a maximum of 12 out of 14 symbols within the special subframe "S" can be utilized for downlink), uplink flexibility is limited to at most six out of ten subframes (with UL-DL configuration 0). Furthermore, Uplink-Pilot-Time-Slot (UpPTS) usage by a UE is limited to either sounding reference signals or random access transmissions. Hence, the widest dynamic range of downlink to uplink ratio is roughly from 9/1 to 4/6. Because the gains are dependent on the amount of flexibility, it would be beneficial if the dynamic range could be improved even further. In particular, it could be beneficial if more uplink resources could be allocated in situations with a lot of uplink traffic compared to downlink traffic.

One difficulty with allocating more uplink subframes is related to maintaining backwards compatibility. Downlink subframe 0 carries the Physical-Broadcast Channel (PBCH) that is needed for accessing the cell, and downlink subframe 5 carries SIB1 (every 20 ms) which is equally important for obtaining System Information. Further, downlink subframes 0 and 5 also carry the secondary synchronization signal (SSS) required for cell search and for performing Radio-Resource Management (RRM) measurements. Hence, these subframes (0 and 5) cannot be converted to uplink subframes or otherwise backwards compatibility is lost. In TDD, subframes 1 and 6 further carry the primary synchronization signal (PSS), which is also required for cell search and performing RRM measurements. Thus, it is not possible to convert these subframes (1 and 6) fully to uplink either. Hence, in view of the above, subframes 0, 1, 5, and 6 cannot be converted into uplink subframes in the same way as other downlink subframes unless backwards compatibility is compromised. As such, a relevant problem relates to increasing UL-DL flexibility without compromising backwards compatibility.

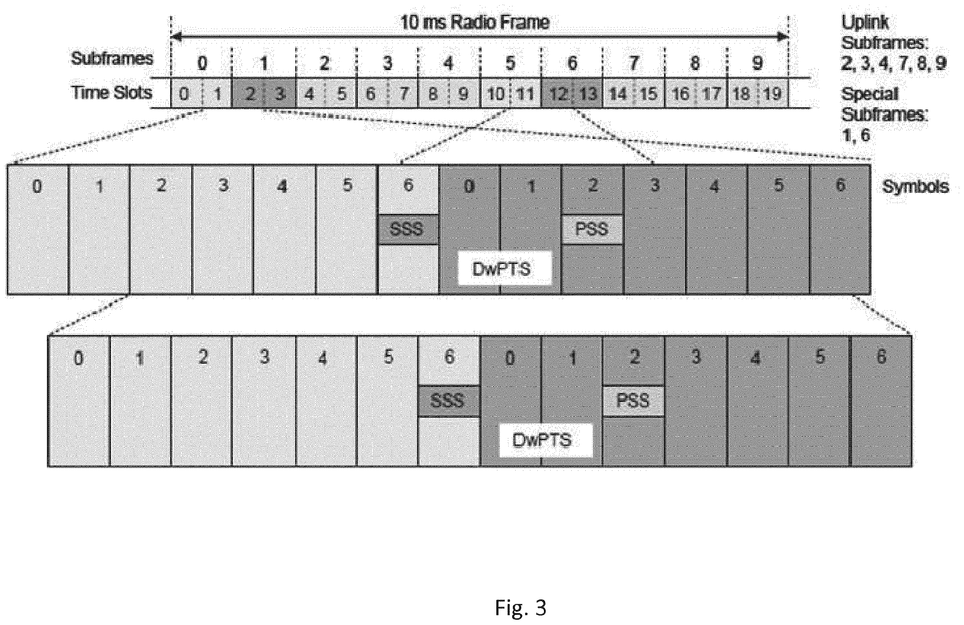

Fig. 3 illustrates a configuration of PSS/SSS transmissions. Specifically, Fig. 3 illustrates a configuration of PSS/SSS transmissions in subframes 0, 1, 5, and 6 in accordance with one embodiment.

Subframe 1 and, in UL-DL configurations 0, 1, 2, and 6, also subframe 6 are referred to as special subframes (S) which comprise a Downlink-Pilot-Time-Slot (DwPTS) field, a guard period (GP), and an Uplink-Pilot-Time-Slot (UpPTS) field. DwPTS corresponds to a downlink direction and contains the PSS, while UpPTS corresponds to an uplink direction. A guard period is used for switching from downlink to uplink.

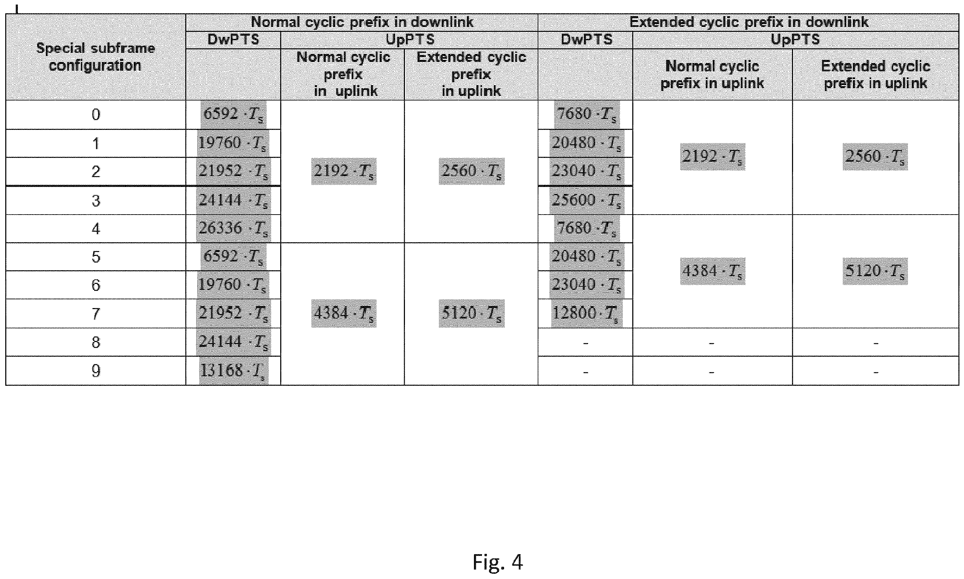

Fig. 4 illustrates 10 different special subframe configurations. A special subframe configuration is given to the UE by the SIB1 and is, therefore, (semi-)static and the same for both special subframes within a radio frame.

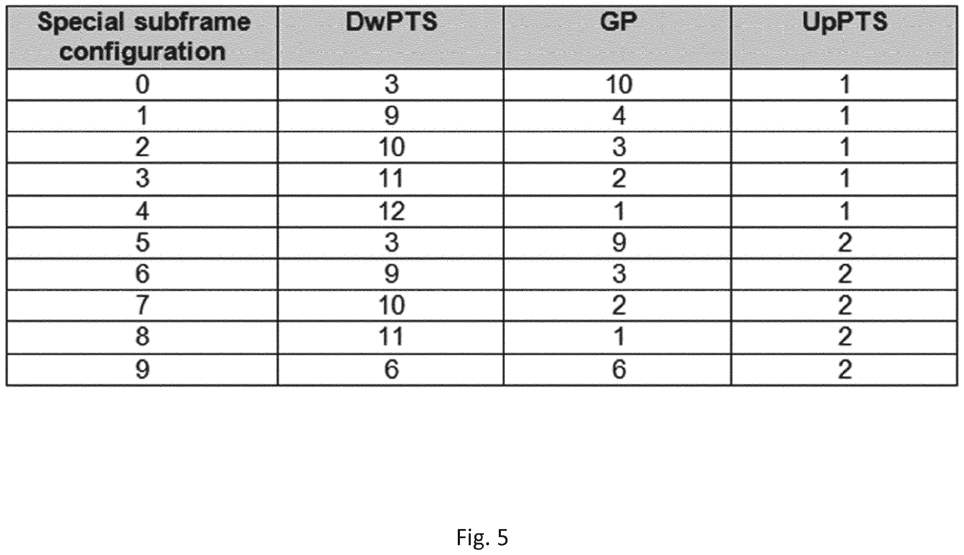

Fig. 5 also illustrates special subframe configurations. Fig. 5 illustrates special subframe configurations in terms of Orthogonal-Frequency-Division-Multiplex (OFDM) symbols per field for normal cyclic prefix (CP).

Embodiments of the present invention can improve the dynamic range of elMTA, for example, by enabling increased flexibility for dynamic TDD, thus increasing the gains of the feature.

Embodiments of the present invention enable dynamic reconfiguration of a special subframe. When more uplink is needed, an uplink-heavy special subframe configuration can be utilized, and, when more downlink is needed, a downlink-heavy special subframe configuration can be utilized.

The dynamic reconfiguration can be achieved by means of the following steps. At least one dynamically signaled UL-DL configuration can be associated with a different special-subframe configuration. When using certain embodiments of the present invention, no additional signaling may be required to indicate the special-subframe configuration. For instance, UL-heavy UL-DL configurations (such as configuration 0 as illustrated in Fig. 2) could be associated with a (potentially new) UL-heavy special subframe configuration. DL-heavy UL-DL configurations (such as configuration 5) could be associated with DL-heavy special subframe configurations (such as special subframe configuration 4 as shown in Fig. 5, for example).

Another embodiment defines an additional/complementary UL-DL configuration (such as configuration 7) and associates the additional/complementary UL-DL configuration with a new subframe configuration including a new special subframe configuration. As described above, there exist seven available UL-DL configurations and, when using 3-bit signaling for dynamic reconfiguration of UL-DL configuration, one codepoint is currently unused (3-bit signaling provides a total of eight codepoints). The unused codepoint can be used to indicate an eighth UL-DL configuration (the eighth UL-DL configuration corresponding to "configuration 7").

The association between the UL-DL configuration and the special subframe configuration can be pre-determined, or the association can be configured via Radio-Resource-Control (RRC) signaling.

Embodiments of the present invention also introduce a shortened Physical-Uplink-Shared-Channel (PUSCH) format to Uplink-Pilot-Time-Slot (UpPTS), to be used when an UL-heavy special subframe configuration is utilized. Embodiments of the present invention can utilize the UL-heavy special subframe configuration by using a configuration with more uplink symbols in place of the special subframe in the radio frame. There may be a dependency on the UL-DL configuration such that, in configurations 0-2 and 6, subframes 1 and 6 can be utilized, and, in UL-DL configurations 3-5, subframe 1 can be utilized. Backwards compatibility can be ensured by signaling in SIB1, for example. The signaling can signal a special subframe configuration with a short Downlink-Pilot-Time-Slot (DwPTS) field, for instance, special subframe configuration 0 or 5 (as illustrated in Fig. 5). In this case, legacy UEs assume a long guard period during which the increased UL-DL flexibility can be enabled.

For Release 12 eIMTA, it has been agreed that the UL-DL configuration shall be indicated by a specific Downlink-Control-Information (DCI) format transmitted on Physical-Downlink-Control-Channel (PDCCH) in a common search space. The agreements from 3GPP RAN1#74bis meeting read as follows:
- New Radio-Network-Temporary-Identifier(s) (RNTI(s)) for explicit reconfiguration DCI (eIMTA-RNTI) will be introduced.
- The reconfiguration DCI, at least, carries 3 bits to explicitly indicate one of the existing 7 UL/DL configurations.
- Explicit reconfiguration DCI is transmitted in at least a parameterized-cell (Pcell) PDCCH Common-Search-Space (CSS).
- If a UE is configured with two or more eIMTA-enabled cells, the UE can be indicated by one explicit reconfiguration DCI for the two or more eIMTA-enabled cells, if the DCI is transmitted in Pcell Physical-Downlink-Control Channel (PDCCH) Common-Search-Space (CSS).
- Two or more indicators (each indicator comprising a 3-bit indicator, for example) for the corresponding two or more eIMTA-enabled cells can be included in one explicit reconfiguration Downlink-Control-Information (DCI) for a user equipment (UE) configured with two or more eIMTA-enabled cells, if the DCI is transmitted in Pcell PDCCH CSS.
- A UE is expected to monitor explicit reconfiguration DCI at least in a set of periodic subframes (subject to Discontinuous Reception (DRX) operation).
- Whether or not to monitor additional subframes in addition to the set of periodic subframes is reserved for further study.
- The set of periodic subframes is defined by configuration.
- Whether or not to have a modification period during which the UE can assume the same configuration is reserved for further study.
- Whether the UE can combine multiple DCI transmissions within the given modification period is reserved for further study.

The agreements from 3GPP RAN1#74bis meeting also provide the following working assumptions:
- The DCI size to carry reconfiguration bits is generally aligned to DCI format 1C.
- If the explicit reconfiguration DCI only carries information for explicit reconfiguration, the number of eIMTA-RNTI configured for the UE is 1.
- Signaling design for explicit reconfiguration should not be optimized for Coordinated-Multipoint (CoMP) Scenario 4.
- Signaling design for explicit reconfiguration should support carrier aggregation.

In view of the above, a DCI transmitted in predefined subframes indicates the UL-DL configuration to be applied.

According to embodiments of the present invention, the same DCI can also indicate the special subframe configuration through the association between the indicated UL-DL configuration to be applied and the special subframe configuration.

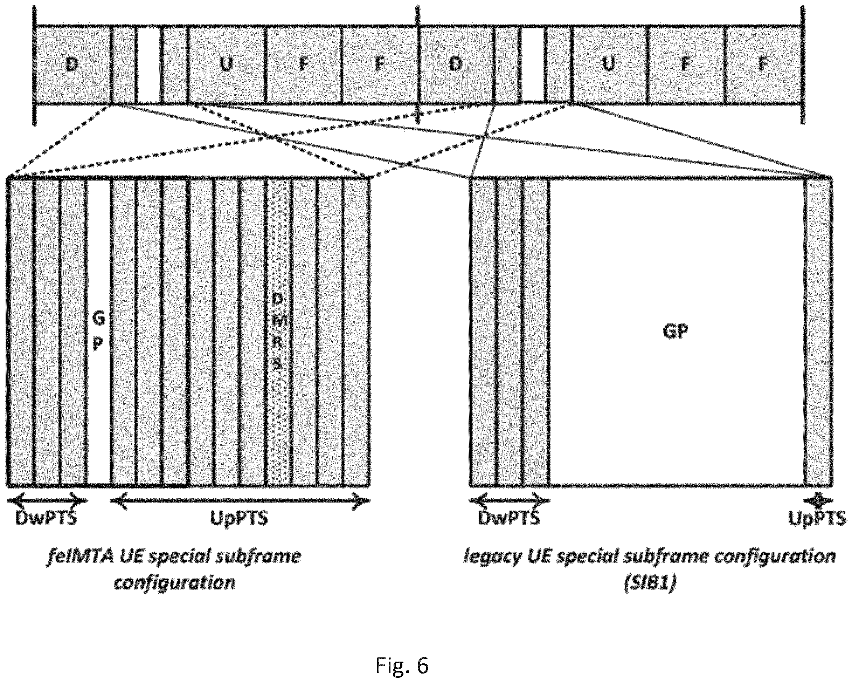

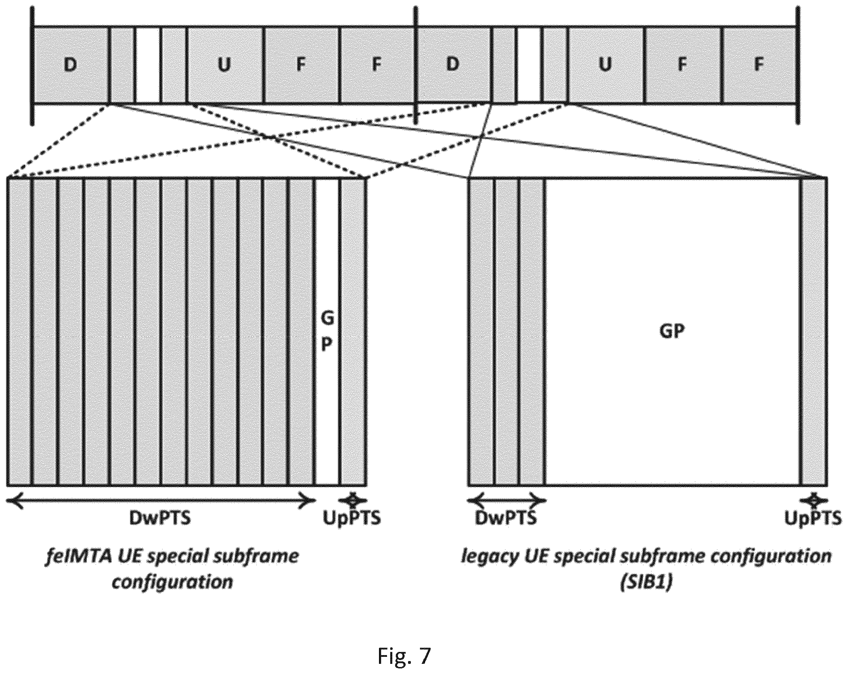

To improve uplink flexibility, a new UL-heavy special subframe configuration would generally need to be defined. An example of a UL-heavy special subframe could be a subframe with a DwPTS of three symbols, a guard period (GP) of one symbol, and a UpPTS of 10 symbols. In such a case, the legacy UEs could be configured (by SIB1) with special subframe configuration 0 that has a DwPTS of three symbols and a UpPTS of one symbol. This option is illustrated in Fig. 6. Fig. 7 further illustrates the configuration in case of DL-heavy UL-DL configuration (UL-DL configuration 2 in this case).

Figure 6 illustrates a UL-heavy UL-DL configuration and an associated UL-heavy special subframe configuration with a shortened PUSCH.

Figure 7 illustrates a DL-heavy UL-DL configuration and an associated DL-heavy special subframe configuration. Legacy UEs can still assume the SIB1-signaled (conservative) special subframe configuration.

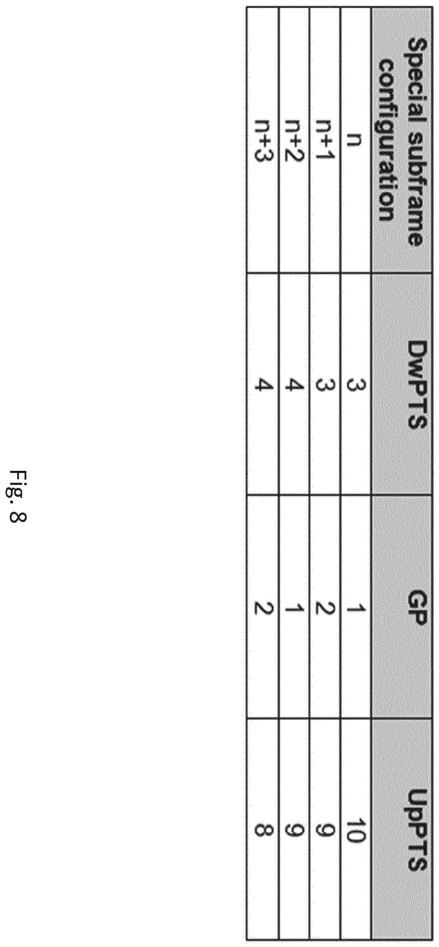

Fig. 8 illustrates examples of UL-heavy special subframe configurations (normal Cyclic Prefix (CP)).

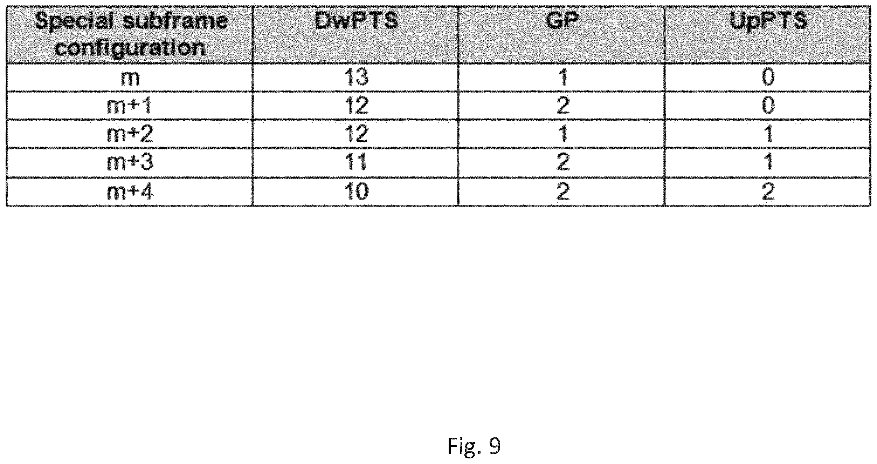

Fig. 9 illustrates different options to define DL-heavy special subframe configurations. There are different options available to define DL-heavy special subframe configurations, as shown in Fig. 9. Some of these DL-heavy special subframe configurations already exist. In one embodiment, there is no UpPTS at all (to get more data on the DL side). In this case, neither Physical-Resource-Access-Channel (PRACH) nor periodic Sounding-Reference-Signal (SRS) should not be configured to UpPTS (for legacy UEs).

Various embodiments of the present invention are possible. For example, it is possible to apply different special subframe configurations for special subframes #1 and #6. As such, a plurality of special subframe configurations can be applied to each radio frame.

As shown in Fig. 6, embodiments of the present invention can further benefit from introduction of a shortened Physical-Uplink-Shared-Channel (PUSCH) format to enable allocation of PUSCH into the long UpPTS field. One possibility is to just puncture the first UL Demodulation-Reference-Signal (DMRS) symbol and transmit the second UL DMRS symbol in its current location. The eIMTA feature is most useful in small cells to which only low mobility UEs are typically connected, hence, a single UL DMRS symbol may be assumed to be enough for uplink channel estimation and puncturing the first UL DMRS symbol can be assumed not to cause any problems.

From a HARQ/scheduling timing point of view, a downlink-heavy special subframe configuration can be supported with the existing methods developed for eIMTA. An uplink-heavy special subframe configuration may require some additional signaling in order to support UL grant/Physical-Hybrid-ARQ-Indicator-Channel (UL grant/PHICH) triggered scheduling of shortened PUSCH via UpPTS. One potential option is to reuse an UL grant/PHICH framework defined for multi-subframe scheduling defined for TD-LTE/UL-DL configuration 0.

In view of the above, in embodiments of the present invention, a base station / eNB may, optionally, determine the association of at least one UL-DL configuration to a specific special subframe configuration, and indicate this association to the UE via RRC signaling. Typically, the eNB would configure a UL-heavy special subframe configuration based on a UL-heavy UL-DL configuration and, respectively, a DL-heavy special subframe configuration based on a DL-heavy UL-DL configuration. In another embodiment, this association may be predetermined in the specifications.

Embodiments of the present invention can transmit UL-DL reconfiguration signaling which indicates the new UL-DL configuration, and thus the signaling also signals the new special subframe configuration via the association between the two.

Embodiments of the present invention receive/transmit according to the newly signaled UL-DL configuration and the associated special subframe configuration.

In the event of using a UL-heavy special subframe configuration, embodiments of the present invention receive shortened PUSCH in the (long) UpPTS field.

Correspondingly, the UE would potentially receive Radio-Resource-Control (RRC) configuration signaling containing association of each UL-DL configuration to a specific special subframe configuration.

The UE can also receive UL-DL reconfiguration signaling indicating the new UL-DL configuration, and, hence, also the new special subframe configuration via the association between the two.

Embodiments of the present invention can transmit/receive according to the newly signaled UL-DL configuration and the associated special subframe configuration.

In case of a UL-heavy special subframe configuration, embodiments of the present invention can transmit shortened PUSCH in the (long) UpPTS field.

In case a UE has not received valid signaling for dynamic reconfiguration of UL-DL configuration, it will follow the special subframe configuration with a short DwPTS field and signaled in SIB1.

In view of the above, embodiments of the present invention can offer the advantage of increasing UL-DL flexibility (uplink flexibility increases from 60% to 72.3%), and therefore, an increased gain from the elMTA feature.

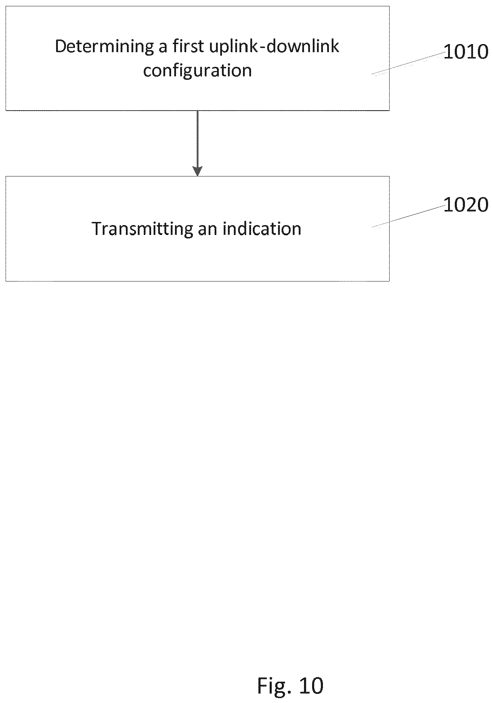

Fig. 10 illustrates a flowchart of a method in accordance with embodiments of the invention. The method illustrated in Fig. 10 includes, at 1010, determining, by a network entity, a first uplink-downlink configuration for a cell among a plurality of uplink-downlink configurations. The method also includes, at 1020, transmitting an indication indicating the first uplink-downlink configuration. At least two of the uplink-downlink configurations of the plurality of uplink-downlink configurations are associated with a special subframe configuration. At least one of the associated special subframe configurations is distinct from at least one other special subframe configuration.

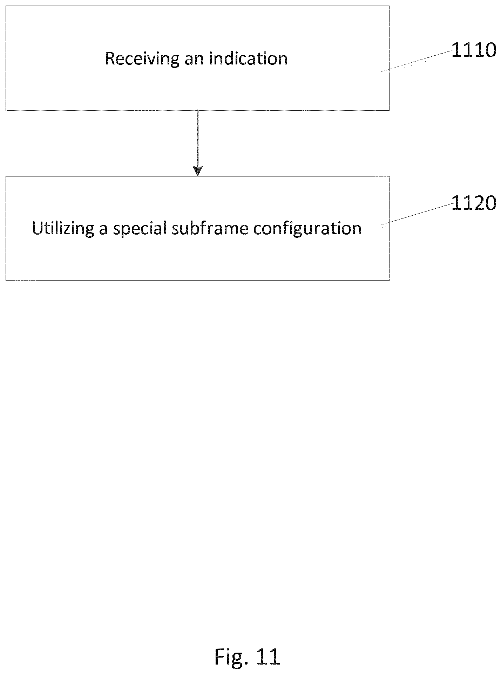

Fig. 11 illustrates a flowchart of a method in accordance with embodiments of the invention. The method illustrated in Fig. 11 includes, at 1110, receiving, by a user equipment, an indication indicating an uplink-downlink configuration, wherein the uplink-downlink configuration is associated with a special subframe configuration. The method also includes, at 1120, utilizing the special subframe configuration. The indicated uplink-downlink configuration is an uplink-downlink configuration among a plurality of uplink-downlink configurations. At least two of the uplink-downlink configurations of the plurality of uplink-downlink configurations are associated with a special subframe configuration. At least one of the associated special subframe configurations is distinct from at least one other special subframe configuration.

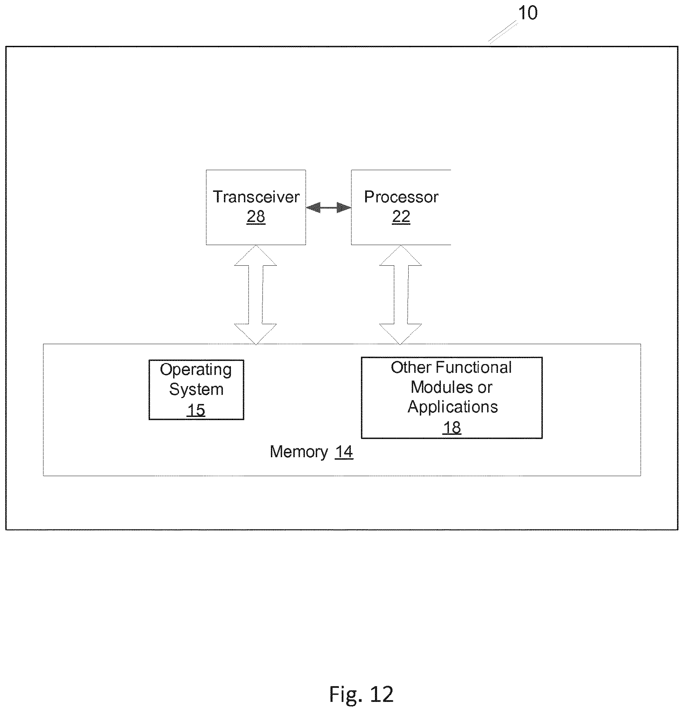

Fig. 12 illustrates an apparatus in accordance with embodiments of the invention. In one embodiment, the apparatus can be a network entity such as a base station and/or an evolved Node B (eNB). In another embodiment, the apparatus can be a user equipment. Apparatus 10 can include a processor 22 for processing information and executing instructions or operations. Processor 22 can be any type of general or specific purpose processor. While a single processor 22 is shown in Fig. 12, multiple processors can be utilized according to other embodiments. Processor 22 can also include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples.

Apparatus 10 can further include a memory 14, coupled to processor 22, for storing information and instructions that can be executed by processor 22. Memory 14 can be one or more memories and of any type suitable to the local application environment, and can be implemented using any suitable volatile or nonvolatile data storage technology such as a semiconductor-based memory device, a magnetic memory device and system, an optical memory device and system, fixed memory, and removable memory. For example, memory 14 include any combination of random access memory (RAM), read only memory (ROM), static storage such as a magnetic or optical disk, or any other type of non-transitory machine or computer readable media. The instructions stored in memory 14 can include program instructions or computer program code that, when executed by processor 22, enable the apparatus 10 to perform tasks as described herein.

Apparatus 10 can also include one or more antennas (not shown) for transmitting and receiving signals and/or data to and from apparatus 10. Apparatus 10 can further include a transceiver 28 that modulates information on to a carrier waveform for transmission by the antenna(s) and demodulates information received via the antenna(s) for further processing by other elements of apparatus 10. In other embodiments, transceiver 28 can be capable of transmitting and receiving signals or data directly.

Processor 22 can perform functions associated with the operation of apparatus 10 including, without limitation, precoding of antenna gain/phase parameters, encoding and decoding of individual bits forming a communication message, formatting of information, and overall control of the apparatus 10, including processes related to management of communication resources.

In an embodiment, memory 14 can store software modules that provide functionality when executed by processor 22. The modules can include an operating system 15 that provides operating system functionality for apparatus 10. The memory can also store one or more functional modules 18, such as an application or program, to provide additional functionality for apparatus 10. The components of apparatus 10 can be implemented in hardware, or as any suitable combination of hardware and software.

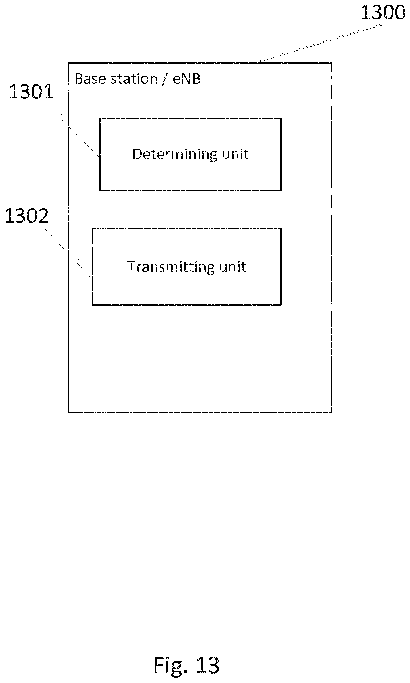

Fig. 13 illustrates an apparatus in accordance with embodiments of the invention. Apparatus 1300 can be a network entity such as a base station / eNB, for example. Apparatus 1300 can include a determining unit 1301 that determines a first uplink-downlink configuration for a cell among a plurality of uplink-downlink configurations. Apparatus 1300 also includes a transmitting unit 1302 that transmits an indication indicating the first uplink-downlink configuration. At least two of the uplink-downlink configurations of the plurality of uplink-downlink configurations are associated with a special subframe configuration. At least one of the associated special subframe configurations is distinct from at least one other special subframe configuration.

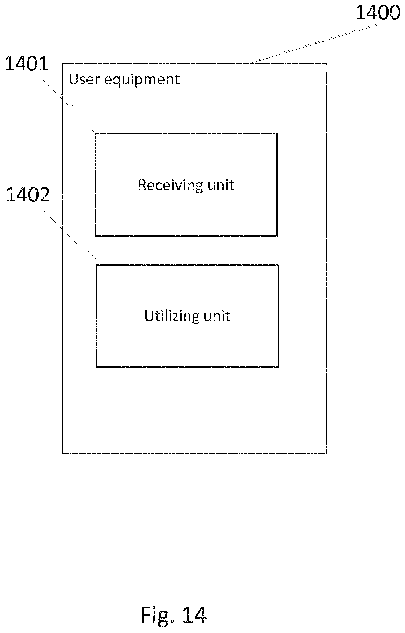

Fig. 14 illustrates an apparatus in accordance with embodiments of the invention. Apparatus 1400 can be a user equipment, for example. Apparatus 1400 can include a receiving unit 1401 that receives an indication indicating an uplink-downlink configuration. The uplink-downlink configuration is associated with a special subframe configuration. Apparatus 1400 also includes a utilizing unit 1402 that utilizes the special subframe configuration. The indicated uplink-downlink configuration is an uplink-downlink configuration among a plurality of uplink-downlink configurations. At least two of the uplink-downlink configurations of the plurality of uplink-downlink configurations are associated with a special subframe configuration. At least one of the associated special subframe configurations is distinct from at least one other special subframe configuration.

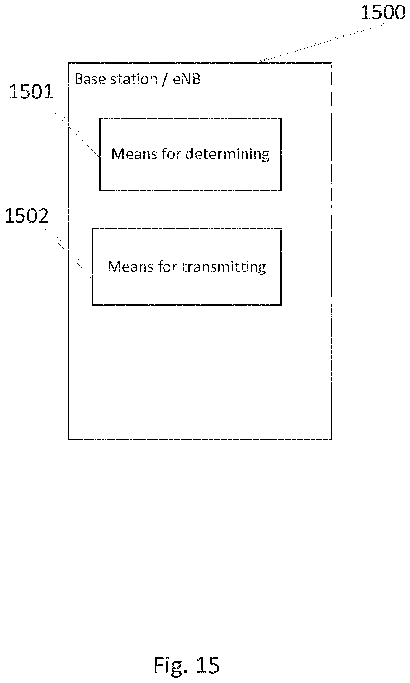

Fig. 15 illustrates an apparatus in accordance with embodiments of the invention. Apparatus 1500 can be a network entity such as a base station / eNB, for example. Apparatus 1500 can include a determining means 1501 for determining a first uplink-downlink configuration for a cell among a plurality of uplink-downlink configurations. Apparatus 1500 also includes a transmitting means 1502 for transmitting an indication indicating the first uplink-downlink configuration. At least two of the uplink-downlink configurations of the plurality of uplink-downlink configurations are associated with a special subframe configuration. At least one of the associated special subframe configurations is distinct from at least one other special subframe configuration.

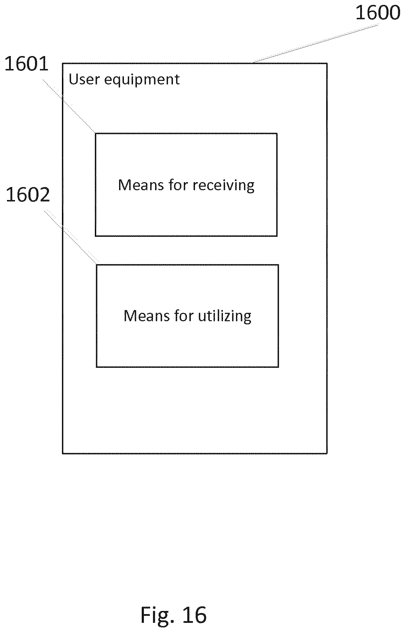

Fig. 16 illustrates an apparatus in accordance with embodiments of the invention. Apparatus 1600 can be a user equipment, for example. Apparatus 1600 can include a receiving means 1601 for receiving an indication indicating an uplink-downlink configuration. The uplink-downlink configuration is associated with a special subframe configuration. Apparatus 1600 also includes a utilizing means 1602 for utilizing the special subframe configuration. The indicated uplink-downlink configuration is an uplink-downlink configuration among a plurality of uplink-downlink configurations. At least two of the uplink-downlink configurations of the plurality of uplink-downlink configurations are associated with a special subframe configuration. At least one of the associated special subframe configurations is distinct from at least one other special subframe configuration.

The described features, advantages, and characteristics of the invention can be combined in any suitable manner in one or more embodiments. One skilled in the relevant art will recognize that the invention can be practiced without one or more of the specific features or advantages of a particular embodiment. In other instances, additional features and advantages can be recognized in certain embodiments that may not be present in all embodiments of the invention. One having ordinary skill in the art will readily understand that the invention as discussed above may be practiced with steps in a different order, and/or with hardware elements in configurations which are different than those which are disclosed.

## Claims

1. A method, comprising, in a long term evolution time-division-duplex system:
determining (1010), by a network entity, a first uplink-downlink configuration for a cell among a plurality of uplink-downlink configurations; and
transmitting (1020), by the network entity, an indication indicating the first uplink-downlink configuration, wherein at least two of the uplink-downlink configurations of the plurality of uplink-downlink configurations are associated with a special subframe configuration, and at least one of the associated special subframe configurations is distinct from at least one other special subframe configuration, **characterized in that**, if the first uplink-downlink configuration shows more traffic in uplink and the special subframe configuration associated with the first uplink-downlink configuration comprises more symbols allocated for an uplink-pilot-time-slot than for a guard period and downlink-pilot-time-slot, the uplink-pilot-time-slot contains a physical-uplink-shared-channel.

2. The method according to claim 1, wherein the association between the first uplink-downlink configuration and the associated special subframe configuration is pre-determined or is configured via Radio-Resource-Control signaling.

3. The method according to any of claims 1-2, further comprising transmitting an indication indicating a second uplink-downlink configuration, wherein the indication is transmitted via a system information block.

4. The method according to any of claims 1-3, further comprising transmitting an indication indicating a special subframe configuration with a long guard period, wherein the indication is transmitted via a system information block.

5. An apparatus (10), comprising:
at least one processor (22); and
at least one memory (14) including computer program code,
the at least one memory and the computer program code configured, with the at least one processor, to cause the apparatus at least to, in a long-term evolution time division duplex system:
determine a first uplink-downlink configuration for a cell among a plurality of uplink-downlink configurations; and
transmit an indication indicating the first uplink-downlink configuration, wherein at least two of the uplink-downlink configurations of the plurality of uplink-downlink configurations are associated with a special subframe configuration, and at least one of the associated special subframe configurations is distinct from at least one other special subframe configuration,
**characterized in that**, if the first uplink-downlink configuration shows more traffic in uplink and the special subframe configuration associated with the first uplink-downlink configuration comprises more symbols allocated for an uplink-pilot-time-slot than for a guard period and downlink-pilot-time-slot, the uplink-pilot-time-slot contains a physical-uplink-shared-channel.

6. The apparatus according to claim 5, wherein the association between the first uplink-downlink configuration and the associated special subframe configuration is pre-determined or is configured via Radio-Resource-Control signaling.

7. The apparatus according to any of claims 5-6, wherein the at least one memory and the computer program code are configured, with the at least one processor, to cause the apparatus at least to transmit an indication indicating a second uplink-downlink configuration, wherein the indication is transmitted via a system information block.

8. The apparatus according to any of claims 5-7, wherein the at least one memory and the computer program code are configured, with the at least one processor, to cause the apparatus at least to transmit an indication indicating a special subframe configuration with a long guard period, wherein the indication is transmitted via a system information block.

9. A computer program product, embodied on a non-transitory computer readable medium, the computer program product configured to control a processor to perform a method according to any of claims 1-4.

## Patentansprüche

1. Verfahren, das in einem Long-Term-Evolution-Zeitduplex-System Folgendes umfasst:
Bestimmen (1010), durch eine Netzentität, einer ersten Uplink-Downlink-Konfiguration für eine Zelle unter mehreren Uplink-Downlink-Konfigurationen; und
Übertragen (1020), durch die Netzentität, einer Angabe, die die erste Uplink-Downlink-Konfiguration angibt, wobei mindestens zwei der Uplink-Downlink-Konfigurationen der mehreren Uplink-Downlink-Konfigurationen mit einer speziellen Unterrahmenkonfiguration assoziiert sind und sich mindestens eine der assoziierten speziellen Unterrahmenkonfigurationen von mindestens einer anderen speziellen Unterrahmenkonfiguration unterscheidet, **dadurch gekennzeichnet, dass**,
falls die erste Uplink-Downlink-Konfiguration mehr Datenverkehr im Uplink zeigt und die mit der ersten Uplink-Downlink-Konfiguration assoziierte spezielle Unterrahmenkonfiguration mehr für einen Uplink-Pilot-Zeitschlitz als für eine Schutzperiode und einen Downlink-Pilot-Zeitschlitz zugewiesene Symbole umfasst, der Uplink-Pilot-Zeitschlitz einen physischen gemeinsam genutzten Uplink-Kanal enthält.

2. Verfahren nach Anspruch 1, wobei die Assoziation zwischen der ersten Uplink-Downlink-Konfiguration und der assoziierten speziellen Unterrahmenkonfiguration vorgegeben ist oder über eine Funkressourcensteuerungssignalisierung konfiguriert wird.

3. Verfahren nach einem der Ansprüche 1-2, ferner umfassend Übertragen einer Angabe, die eine zweite Uplink-Downlink-Konfiguration angibt, wobei die Angabe über einen Systeminformationsblock übertragen wird.

4. Verfahren nach einem der Ansprüche 1-3, ferner umfassend Übertragen einer Angabe, die eine spezielle Unterrahmenkonfiguration mit einer langen Schutzperiode angibt, wobei die Angabe über einen Systeminformationsblock übertragen wird.

5. Einrichtung (10), die Folgendes umfasst:
mindestens einen Prozessor (22); und
mindestens einen Speicher (14), der Computerprogrammcode beinhaltet,
wobei der mindestens eine Speicher und der Computerprogrammcode dazu konfiguriert sind, mit dem mindestens einen Prozessor zu veranlassen, dass die Einrichtung in einem Long-Term-Evolution-Zeitduplex-System zumindest Folgendes durchführt:
Bestimmen einer ersten Uplink-Downlink-Konfiguration für eine Zelle unter mehreren Uplink-Downlink-Konfigurationen; und
Übertragen einer Angabe, die die erste Uplink-Downlink-Konfiguration angibt, wobei mindestens zwei der Uplink-Downlink-Konfigurationen der mehreren Uplink-Downlink-Konfigurationen mit einer speziellen Unterrahmenkonfiguration assoziiert sind und sich mindestens eine der assoziierten speziellen Unterrahmenkonfigurationen von mindestens einer anderen speziellen Unterrahmenkonfiguration unterscheidet, **dadurch gekennzeichnet, dass**,
falls die erste Uplink-Downlink-Konfiguration mehr Datenverkehr im Uplink zeigt und die mit der ersten Uplink-Downlink-Konfiguration assoziierte spezielle Unterrahmenkonfiguration mehr für einen Uplink-Pilot-Zeitschlitz als für eine Schutzperiode und einen Downlink-Pilot-Zeitschlitz zugewiesene Symbole umfasst, der Uplink-Pilot-Zeitschlitz einen physischen gemeinsam genutzten Uplink-Kanal enthält.

6. Einrichtung nach Anspruch 5, wobei die Assoziation zwischen der ersten Uplink-Downlink-Konfiguration und der assoziierten speziellen Unterrahmenkonfiguration vorgegeben ist oder über eine Funkressourcensteuerungssignalisierung konfiguriert wird.

7. Einrichtung nach einem der Ansprüche 5-6, wobei der mindestens eine Speicher und der Computerprogrammcode dazu konfiguriert sind, mit dem mindestens einen Prozessor zu veranlassen, dass die Einrichtung zumindest eine Angabe überträgt, die eine zweite Uplink-Downlink-Konfiguration angibt, wobei die Angabe über einen Systeminformationsblock übertragen wird.

8. Einrichtung nach einem der Ansprüche 5-7, wobei der mindestens eine Speicher und der Computerprogrammcode dazu konfiguriert sind, mit dem mindestens einen Prozessor zu veranlassen, dass die Einrichtung zumindest eine Angabe überträgt, die eine spezielle Unterrahmenkonfiguration mit einer langen Schutzperiode angibt, wobei die Angabe über einen Systeminformationsblock übertragen wird.

9. Computerprogrammprodukt, das auf einem nichtflüchtigen computerlesbaren Medium umgesetzt ist, wobei das Computerprogrammprodukt konfiguriert ist zum dahingehenden Steuern eines Prozessors, ein Verfahren nach einem der Ansprüche 1-4 durchzuführen.

## Revendications

1. Procédé, comprenant, dans un système de duplexage par répartition temporelle évolutif à long terme :
la détermination (1010), par une entité de réseau, d'une première configuration de liaison montante-liaison descendante pour une cellule parmi une pluralité de configurations de liaison montante-liaison descendante ; et
la transmission (1020), par l'entité de réseau, d'une indication indiquant la première configuration de liaison montante-liaison descendante, dans lequel au moins deux des configurations de liaison montante-liaison descendante de la pluralité de configurations de liaison montante-liaison descendante sont associées à une configuration de sous-trame spéciale, et au moins l'une des configurations de sous-trame spéciales associées est distincte d'au moins une autre configuration de sous-trame spéciale, **caractérisé en ce que**,
si la première configuration de liaison montante-liaison descendante présente plus de trafic de liaison montante et si la configuration de sous-trame spéciale, associée à la première configuration de liaison montante-liaison descendante, comprend plus de symboles alloués à un créneau temporel pilote de liaison montante qu'à une période de garde et à un créneau temporel pilote de liaison descendante, le créneau temporel pilote de liaison montante contient un canal partagé de liaison montante physique.

2. Procédé selon la revendication 1, dans lequel l'association entre la première configuration de liaison montante-liaison descendante et la configuration de sous-trame spéciale associée est prédéterminée ou est configurée via la signalisation de Commande de Ressource Radio.

3. Procédé selon l'une quelconque des revendications 1-2, comprenant en outre la transmission d'une indication indiquant une deuxième configuration de liaison montante-liaison descendante, dans lequel l'indication est transmise via un bloc d'informations système.

4. Procédé selon l'une quelconque des revendications 1-3, comprenant en outre la transmission d'une indication indiquant une configuration de sous-trame spéciale présentant une longue période de garde, dans lequel l'indication est transmise via un bloc d'informations système.

5. Appareil (10), comprenant :
au moins un processeur (22) ; et
au moins une mémoire (14) comprenant un code de programme informatique,
ladite au moins une mémoire et le code de programme informatique étant configurés, avec ledit au moins un processeur, pour amener l'appareil, dans un système de duplexage par répartition temporelle évolutif à long terme, à au moins :
déterminer une première configuration de liaison montante-liaison descendante pour une cellule parmi une pluralité de configurations de liaison montante-liaison descendante ; et
transmettre une indication indiquant la première configuration de liaison montante-liaison descendante, dans lequel au moins deux des configurations de liaison montante-liaison descendante de la pluralité de configurations de liaison montante-liaison descendante sont associées à une configuration de sous-trame spéciale, et au moins l'une des configurations de sous-trame spéciales associées est distincte d'au moins une autre configuration de sous-trame spéciale,
**caractérisé en ce que**,
si la première configuration de liaison montante-liaison descendante présente plus de trafic de liaison montante et si la configuration de sous-trame spéciale associée à la première configuration de liaison montante-liaison descendante comprend plus de symboles alloués à un créneau temporel pilote de liaison montante qu'à une période de garde et à un créneau temporel pilote de liaison descendante, le créneau temporel pilote de liaison montante contient un canal partagé de liaison montante physique.

6. Appareil selon la revendication 5, dans lequel l'association entre la première configuration de liaison montante-liaison descendante et la configuration de sous-trame spéciale associée est prédéterminée ou est configurée via la signalisation de Commande de Ressource Radio.

7. Appareil selon l'une quelconque des revendications 5-6, dans lequel ladite au moins une mémoire et le code de programme informatique sont configurés, avec ledit au moins un processeur, pour amener l'appareil à au moins transmettre une indication indiquant une deuxième configuration de liaison montante-liaison descendante, dans lequel l'indication est transmise via un bloc d'informations système.

8. Appareil selon l'une quelconque des revendications 5-7, dans lequel ladite au moins une mémoire et le code de programme informatique sont configurés, avec ledit au moins un processeur, pour amener l'appareil à au moins transmettre une indication indiquant une configuration de sous-trame spéciale présentant une longue période de garde, dans lequel l'indication est transmise via un bloc d'informations système.

9. Produit de programme informatique, incorporé sur un support lisible par ordinateur non transitoire, le produit de programme informatique étant configuré pour commander un processeur afin qu'il mette en œuvre un procédé selon l'une quelconque des revendications 1-4.
